# EUROPÄISCHE PATENTSCHRIFT

(11) **EP 0 955 622 B1**
(45) Veröffentlichungstag und Bekanntmachung des Hinweises auf die Patenterteilung: **11.08.2004**
(21) Anmeldenummer: 99810410.3
(22) Anmeldetag: 07.05.1999
(51) Int. Cl.: G09F 3/00, A44C 25/00, G02B 27/02

(54) **Schmuckstück**
Piece of jewellery
Bijou

(30) Priorität: 07.05.1998 CH 103598
(43) Veröffentlichungstag der Anmeldung: 10.11.1999
(73) Patentinhaber: Gebr. Niessing GmbH & Co., 48691 Vreden (DE)
(72) Erfinder: Gut, Andreas, 8004 Zürich (CH)
(74) Vertreter: Groner, Manfred

(56) Entgegenhaltungen:
- FR-A- 2 205 238
- US-A- 4 155 626
- US-A- 4 197 665
- US-A- 4 249 330
- US-A- 4 591 238
- US-A- 5 359 798

## Beschreibung

Gegenstand der vorliegenden Erfindung ist ein Schmuckstück nach dem Oberbegriff des Anspruchs 1.

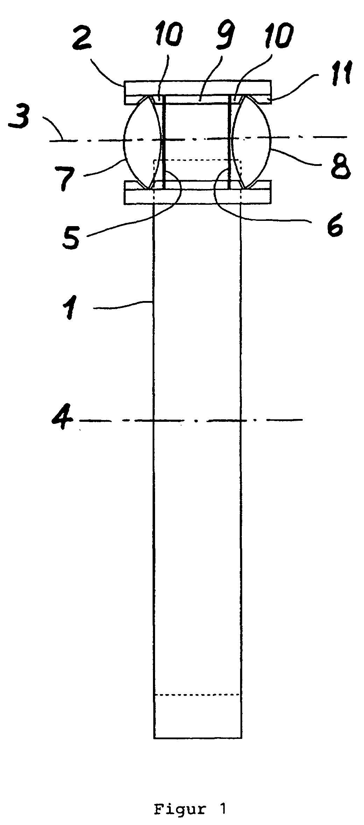

Ein Schmuckstück der genannten Art ist im Stand der Technik aus der FR 2 205 238 bekannt geworden. Dieses weist gemäss Figur 8 in einem Gehäuse zwei Linsen auf, die jeweils auf einen Mikrofilm fokussiert sind.

Die US 4 249 330 offenbart einen Anhänger mit einem Gehäuse, in dem eine Linse angeordnet ist, die auf einen ebenfalls im Gehäuse angeordneten Mikrofilm fokussiert ist. Der Mikrofilm ist zur Aufnahme von medizinischen Daten des Trägers vorgesehen.

Das Schmuckstück der vorliegenden Erfindung unterscheidet sich vom Stand der Technik dadurch, dass zwei transparente Objekte hintereinander in einem Gehäuse untergebracht sind, denen je eine Linse vorgelagert ist, die jeweils auf das entferntere Objekt fokussiert ist. Die Objekte können jeweils ein Bild, ein Text oder ein Gegenstand sein. Es kann sich z.B. um ein persönliches Foto, eine Botschaft in Mikrofilm-Ausführung, oder auch um einen Kristall oder Edelstein usw. handeln.

Das Schmuckstück kann ein Fingerring, Armreif, Halsreif, Anhänger oder dgl. sein. Unter Schmuckstück sollen im weitesten Sinn aber auch Accessoires verstanden werden, wie z.B. Schlüsselanhänger usw.

Objekt und Linse sind vorzugsweise quer in einem axialsymmetrischen Gehäuse untergebracht, das an einem Schmuckstück angebaut ist und in axialer Richtung einen Durchbruch aufweist. Beim Hindurchblicken auf kurze Distanz erscheint dann das Bild usw. im Durchbruch vor dem am anderen Ende des letzteren eintretenden Licht.

In der Zeichnung ist ein Ausführungsbeispiel eines erfindungsgemässen Schmuckstücks in Form eines Fingerrings im Schnitt vergrössert dargestellt.

Am Ring 1 ist ein axialsymmetrisches Gehäuse 2 angebaut, z.B. angelötet, das aus dem gleichen Material wie der Ring, z.B. einem Edelmetall, bestehen kann.

Das Gehäuse 2 bildet einen offenen Zylinder, dessen Axe 3 parallel zur Axe 4 des Rings 1 liegt. Im Zylinder sind quer zur Axe 3 zwei transparente Filme 5, 6 untergebracht, auf denen je eine Figur, z.B. als Zeichnung, dargestellt ist. Von jeder Seite ist den Filmen je eine Linse 7 bzw. 8 vorgelagert, die jeweils auf den entfernteren Film fokussiert ist. Beim Durchblick auf kurze Distanz von der einen Seite erscheint die eine der Darstellungen vor dem vom andern Ende des Gehäuses eintretenden Licht scharf. Entsprechendes gilt für den Durchblick von der andern Richtung. Damit die näherliegende Darstellung beim Durchblick nicht stört, sind die beiden Filme in genügendem Abstand zueinander angeordnet.

Zu diesem Zweck sind die Filme zwischen einem Distanzrohr 9 und je einem Ring 10 festgehalten, der ihre Position gegenüber der Linse 7 bzw. 8 festlegt. Vorzugsweise sind diese Ringe 10 gummielastische Dichtungsringe. Damit ist vermieden, dass Feuchtigkeit in den Raum zwischen den beiden Linsen 7 und 8 eindringt und sich hier Kondensat bilden kann.

Letztere sind durch zwei äussere Ring 11 festgehalten, die im Gehäuse 2 eingepresst sind. Ring 1 und Gehäuse 2 können aus Edelmetall, Stahl, Aluminium oder Kunststoff usw. bestehen.

Das Gehäuse 2, das auch einen eckigen Querschnitt haben kann, kann in jeder geeigneten Weise, z.B. durch Löten, Schrauben, Klammern, Aufschrumpfen oder Laserschweissung, am Ring befestigt sein. Es kann aber auch abnehmbar angebracht sein. Stattdessen kann es jedoch auch einstückig am Ring 1 integriert sein.

Das im Gehäuse untergebrachte Objekt kann ein Bild, z.B. ein persönliches Foto, ein Text, aber auch ein Gegenstand wie ein kleiner Edelstein usw. sein. Bildliche oder textliche Objekte sind in Kleinstformat auf transparentem Filmmaterial (Mikrofilm) dargestellt.

Das Objekt kann im Gehäuse 2 leicht auswechselbar sein. Es wird sich beispielsweise um ein Bild oder einen Text mit Symbolgehalt für den Träger oder die Trägerin, anstelle des früher bekannten "Medaillons", handeln.

## Patentansprüche

1. Schmuckstück, wobei mindestens ein Objekt (5) in Kleinstformat mit mindestens einer vorgeschalteten Linse (8) derart anoder eingebaut ist, dass es beim Durchblick in einer oder zwei Richtungen sichtbar wird, **dadurch gekennzeichnet, dass** zwei transparente Objekte (5, 6) hintereinander in einem Gehäuse (2) untergebracht sind, denen je eine Linse (7, 8) vorgelagert ist, die jeweils auf das entferntere Objekt fokussiert sind.

2. Schmuckstück nach Anspruch 1, **dadurch gekennzeichnet, dass** das Objekt (5) ein Bild, ein Text oder ein Gegenstand ist.

3. Schmuckstück nach Anspruch 1, **dadurch gekennzeichnet, dass** Objekt (5) und Linse (8) quer in einem axialsymmetrischen Gehäuse (2) untergebracht sind, das am Schmuckstück (1) angebaut ist und in axialer Richtung einen Durchbruch aufweist.

4. Schmuckstück nach Anspruch 3, **dadurch gekennzeichnet, dass** das Gehäuse (2) abnehmbar am Schmuckstück angebracht ist.

5. Schmuckstück nach Anspruch 3, **dadurch gekennzeichnet, dass** das Gehäuse (2) einstückig im Schmuckstück integriert ist.

6. Schmuckstück nach Anspruch 3, **dadurch gekennzeichnet, dass** das Objekt (5) im Gehäuse auswechselbar ist.

7. Schmuckstück nach einem der Ansprüche 1 bis 6, **dadurch gekennzeichnet, dass** zwischen Objekt (5) und der Linse (8) ein Dichtungsring (10) angeordnet ist.

8. Schmuckstück nach einem der Ansprüche 1 bis 7, **dadurch gekennzeichnet, dass** zwei Objekte (5, 6) zwischen einem Distanzrohr (9) und je einem Ring (10) festgehalten sind, wobei diese Ringe (10) Dichtungsringe sind.

## Claims

1. Piece of jewellery, at least one miniature-format object (5) being fitted or installed with at least one lens (8) in front, such that it is visible when viewed in one or two directions, **characterized in that** two transparent objects (5, 6) are accommodated one behind the other in a housing (2) and each have a lens (7, 8) positioned in front of them, the lenses each being focussed on the more remote object.

2. Piece of jewellery according to Claim 1, **characterized in that** the object (5) is an image, a text or an article.

3. Piece of jewellery according to Claim 1, **characterized in that** the object (5) and lens (8) are accommodated transversely in an axially symmetrical housing (2) which is fitted on the piece of jewellery (1) and has a through-passage in the axial direction.

4. Piece of jewellery according to Claim 3, **characterized in that** the housing (2) is fitted in a removable manner on the piece of jewellery.

5. Piece of jewellery according to Claim 3, **characterized in that** the housing (2) is integrated integrally in the piece of jewellery.

6. Piece of jewellery according to Claim 3, **characterized in that** the object (5) in the housing is exchangeable.

7. Piece of jewellery according to one of Claims 1 to 6, **characterized in that** a sealing ring (10) is arranged between the object (5) and the lens (8).

8. Piece of jewellery according to one of Claims 1 to 7, **characterized in that** two objects (5, 6) are secured between a spacer tube (9) and in each case one ring (10), these rings (10) being sealing rings.

## Revendications

1. Bijou, dans lequel au moins un objet (5) de format très petit avec au moins une lentille montée devant (8) est installé ou monté de telle sorte qu'il puisse être vu en regardant dans une ou deux directions, **caractérisé en ce que** deux objets transparents (5, 6) sont montés l'un derrière l'autre dans un boîtier (2), devant lesquels est placée à chaque fois une lentille (7, 8), lesquelles sont focalisée sur l'objet plus éloigné.

2. Bijou selon la revendication 1, **caractérisé en ce que** l'objet (5) est une image, un texte ou un objet.

3. Bijou selon la revendication 1, **caractérisé en ce que** l'objet (5) et la lentille (8) sont montés transversalement dans un boîtier à symétrie axiale (2), lequel est monté sur le bijou (1) et présente, dans la direction axiale, un perçage.

4. Bijou selon la revendication 3, **caractérisé en ce que** le boîtier (2) est monté de manière amovible sur le bijou.

5. Bijou selon la revendication 3, **caractérisé en ce que** le boîtier (2) est intégré d'une seule pièce dans le bijou.

6. Bijou selon la revendication 3, **caractérisé en ce que** l'objet (5) dans le bijou peut être remplacé.

7. Bijou selon l'une quelconque des revendications 1 à 6, **caractérisé en ce que** l'on dispose entre l'objet (5) et la lentille (8) une bague d'étanchéité (10).

8. Bijou selon l'une quelconque des revendications 1 à 7, **caractérisé en ce que** deux objets (5, 6) sont fixés entre un tube d'espacement (9) et une bague respective (10), ces bagues (10) étant des bagues d'étanchéité.
